# EUROPÄISCHE PATENTSCHRIFT

(11) **EP 4 018 531 B1**
(45) Veröffentlichungstag und Bekanntmachung des Hinweises auf die Patenterteilung: **16.07.2025**
(21) Anmeldenummer: 20753335.7
(22) Anmeldetag: 05.08.2020
(51) Int. Cl.: H02K 1/27, H02K 16/02, H02K 15/03

(54) **ROTORVORRICHTUNG UND STATORVORRICHTUNG FÜR EINEN FLACHEN BÜRSTENLOSEN ELEKTRISCHEN MOTOR SOWIE FLACHER, BÜRSTENLOSER ELEKTRISCHER MOTOR FÜR EIN DACHSYSTEM EINES AUTOMOBILS**
ROTOR DEVICE AND STATOR DEVICE FOR A FLAT, BRUSHLESS ELECTRIC MOTOR AND FLAT, BRUSHLESS ELECTRIC MOTOR FOR A ROOF SYSTEM OF AN AUTOMOBILE
DISPOSITIF DE ROTOR ET DISPOSITIF DE STATOR POUR UN MOTEUR ÉLECTRIQUE SANS BALAI, PLAT ET MOTEUR ÉLECTRIQUE SANS BALAI PLAT POUR UN SYSTÈME DE TOIT D'UNE AUTOMOBILE

(30) Priorität: 22.08.2019 DE 102019122603
(43) Veröffentlichungstag der Anmeldung: 29.06.2022
(73) Patentinhaber: Webasto SE, 82131 Stockdorf (DE)
(72) Erfinder: SUNILKUMAR, Ramalingesh, 82131 Stockdorf (DE); JAYARAJ, Rajesh Gurupatham, 82131 Stockdorf (DE); GYERKO, Levente, 82131 Stockdorf (DE)
(74) Vertreter: Prüfer & Partner mbB Patentanwälte · Rechtsanwälte
(86) Internationale Anmeldenummer: PCT/EP2020/071990
(87) Internationale Veröffentlichungsnummer: WO 2021/032480

(56) Entgegenhaltungen:
- EP-A2- 2 722 971
- WO-A1-2017/173188
- DE-T5- 112006 000 009
- JP-A- 2010 284 035

## Beschreibung

Die Erfindung betrifft eine Rotorvorrichtung sowie eine Statorvorrichtung für einen flachen bürstenlosen elektrischen Motor, insbesondere für ein Dachsystem eines Automobils, und einen flachen, bürstenlosen elektrischen Motor für ein Dachsystem eines Automobils.

Üblicherweise ist ein flacher, bürstenloser elektrischer Motor als sogenannter Außenläufer oder als sogenannter Innenläufer ausgebildet.

D.h., dass - im Falle eines Außenläufers - eine Rotorvorrichtung Magnete unterschiedlicher Polung aufweist, die außen um eine Statorvorrichtung herum rotieren, wenn die Statorvorrichtung mit elektrischer Energie versorgt wird.

Demgegenüber sind im Falle eines Innenläufers die Magnete der Rotorvorrichtung von der Statorvorrichtung umgeben.

Zusammengefasst und mit anderen Worten ausgedrückt, rotiert die Rotorvorrichtung bei einem Außenläufer außen um die Statorvorrichtung herum, wohingegen die Rotorvorrichtung bei einem Innenläufer von der Statorvorrichtung umgeben ist und in deren Inneren rotiert.

Diese herkömmlichen bürstenlosen elektrischen Motoren müssen mit hoher Präzision gefertigt werden, wodurch die Massenproduktion kostenintensiv ist.

Auch können derartige Motoren nur ein geringes Drehmoment produzieren, das jedoch den ansteigenden Sicherheitsbedürfnis an zum Beispiel ein faltbares oder ein verfahrbares Dachsystems eines Automobils nicht ausreichend gerecht wird. Denn mit den ansteigenden Sicherheitsbedürfnis einhergehend steigt auch die Masse der zu bewegenden Dachelemente eines derartigen Dachsystems.

Aus der Druckschrift WO 2017/173188 A1 ist ein Doppelrotor-Motor bekannt, bei dem ein innerer und äußerer Rotor konzentrisch zueinander ausgebildet und jeweils mit einer Anordnung von Permanentmagneten versehen sind.

Aus der Druckschrift DE 11 2006 000 009 T5 ist ein Doppelrotor für eine Waschmaschinenantrieb mit Innen- und Außenrotor bekannt, die jeweils mit Magneten versehen sind.

Aus der Druckschrift JP 2010-284035 A ist ein Permanentmagneten einsetzender, elektrischer Drehmotor bekannt, bei dem der Rotor eine inneren und eine äußere, jeweils konzentrisch ausgebildete Zylinder aufweist, an welcher die Permanentmagneten angeordnet sind.

Aus der Druckschrift EP 2 722 971 A2 ist bekannt, dass ein bereits montierter Rotor zum Magnetisieren in eine Magnetisierungsvorrichtung eingelegt werden kann.

Daher ist es Aufgabe der vorliegenden Erfindung, eine Rotorvorrichtung sowie vorzugsweise eine Statorvorrichtung für einen flachen bürstenlosen elektrischen Motor, insbesondere für ein Dachsystem eines Automobils, aber auch einen flachen, bürstenlosen elektrischen Motor anzugeben, welche/welcher kostengünstig und materialsparend herstellbar ist sowie vorzugsweise ein erhöhtes Drehmoment zur Verfügung stellt und günstigerweise dabei in seinen Ausmaßen mit bekannten Vorrichtungen und Motoren konkurriert.

Diese Aufgaben werden erfindungsgemäß durch die Merkmale der unabhängigen Patentansprüche gelöst. Weitere vorteilhafte Weiterbildungen sind Gegenstand der Unteransprüche.

Erfindungsgemäß umfasst bei einem ersten Aspekt der vorliegenden Erfindung ein flacher, bürstenloser elektrischer Motor für ein Dachsystem eines Automobils eine Rotorvorrichtung, die aufweist:
- ein Rotorgehäuseelement mit einem ersten und einem zweiten Zylinderelement,
- wobei das Rotorgehäuseelement ein kreisringförmiges Scheibenelement umfasst, das in radialer Richtung eine Innenseite und eine Außenseite aufweist,
- wobei innenseitig das erste Zylinderelement angeordnet ist,
- wobei außenseitig das zweite Zylinderelement angeordnet ist,
- wobei das erste Zylinderelement eine erste Magnetbaugruppe aufweist und das zweite Zylinderelement eine zweite Magnetbaugruppe aufweist,
- wobei das erste Zylinderelement eine innere und eine äußere Mantelfläche aufweist;
- wobei die erste Magnetbaugruppe an der äußeren Mantelfläche des ersten Zylinderelements angeordnet ist,
- wobei an dem ersten Zylinderelement innenseitig, an dessen innerer Mantelfläche ein Wälzlager angeordnet ist,
- wobei die Zylinderelemente hohlzylindrisch ausgebildet sind, unterschiedliche Innen- und Außendurchmesser aufweisen, sodass zwischen den Zylinderelementen eine Statorvorrichtung anordenbar ist, und zueinander konzentrisch ausgerichtet sind,
- wobei der Innendurchmesser des zweiten Zylinderelements größer ausgebildet ist als der Außendurchmesser des ersten Zylinderelements, und
- wobei an jedem Zylinderelement mindestens eine Magnetbaugruppe angeordnet ist.

Ferner weist der flache bürstenlose elektrische Motor eine Statorvorrichtung auf. Diese umfasst:
- ein Statorgehäuseelement mit einem Boden- und einem Wandelement, die derart zueinander angeordnet sind, dass das Statorgehäuseelement topfförmig ausgebildet ist, und
- ein Achsenelement zur außenseitigen Anordnung des Wälzlagers für die Rotorvorrichtung,
wobei die Rotorvorrichtung mit dem Achsenelement der Statorvorrichtung über das Wälzlager verbunden ist, so dass Rotorvorrichtung und Statorvorrichtung relativ zueinander drehbar sind.

An jedem Zylinderelement ist mindestens eine Magnetbaugruppe angeordnet. Auf diese Weise stehen vorzugsweise also im Vergleich zu Lösungen aus dem Stand der Technik wenigstens zwei Magnetbaugruppen zur Verfügung, mit denen es möglich ist, ein Drehmoment zu erzeugen, das auch den ansteigenden Sicherheitsbedürfnissen an ein faltbares oder ein verfahrbares Dachsystem und der damit einhergehenden größeren Masse gerecht wird. Denn mit einem ausreichend großen Drehmoment ist es möglich auch verhältnismäßig schwere Dachelemente eines faltbare oder verfahrbaren Dachsystems mit ausreichender Geschwindigkeit und sicher zu bewegen.

Das erste Zylinderelement weist eine erste Magnetbaugruppe auf, wobei vorzugsweise die erste Magnetbaugruppe holzylinderförmig ausgebildet ist.

Das erste Zylinderelement weist eine innere und eine äußere Mantelfläche auf, wobei die erste Magnetbaugruppe an der äußeren Mantelfläche des ersten Zylinderelements angeordnet ist.

Auch kann vorgesehen sein, dass die erste Magnetbaugruppe ein magnetisierbares Material aufweist, um vorzugsweise unterschiedliche Magnetpole auszubilden. Ein derartiges Material erlaubt zum Beispiel die Ausbildung von magnetischen Polen nach der Montage der Magnetbaugruppe an dem Zylinderelement.

Vorteilhafterweise weist das zweite Zylinderelement eine zweite Magnetbaugruppe auf, wobei vorzugsweise die zweite Magnetbaugruppe holzylinderförmig ausgebildet ist.

Ferner ist es von Vorteil, wenn das zweite Zylinderelement eine innere und eine äußere Mantelfläche aufweist, wobei vorzugsweise die zweite Magnetbaugruppe an der inneren Mantelfläche des zweiten Zylinderelements angeordnet ist.

Des Weiteren ist es vorteilhaft, wenn die zweite Magnetbaugruppe ein magnetisierbares Material aufweist, um unterschiedliche Magnetpole auszubilden. Zum Beispiel erlaubt das vorgenannte magnetisierbare Material also, dass magnetische Pole nach der Montage der Magnetbaugruppe an dem Zylinderelement ausgebildet werden können.

Insbesondere ist es günstig, wenn die erste und zweite Magnetbaugruppe der entsprechenden Zylinderelemente in radialer Richtung hinsichtlich Polpaaren und Anzahl der Polpaare übereinstimmen. Auf diese Weise ist ein effizienter elektrischer Motor realisierbar.

Günstigerweise weist das Rotorgehäuseelement ein kreisringförmiges Scheibenelement, insbesondere als Boden des Rotorgehäuseelements, auf, das in radialer Richtung eine Innenseite und eine Außenseite aufweist.

Auch ist es günstig, wenn innenseitig, insbesondere an der inneren, kreisförmigen Ausnehmung des Scheibenelements bzw. an dessen Rand, das erste Zylinderelement angeordnet ist.

Vorzugsweise ist außenseitig, insbesondere am äußeren Rand des Scheibenelements, das zweite Zylinderelement angeordnet.

Ferner kann vorgesehen sein, dass die Innenseite des Scheibenelements und die innere Mantelfläche des ersten Zylinderelements eben ineinander übergehen.

Vorzugsweise gehen die Außenseite des Scheibenelements und die äußere Mantelfläche des zweiten Zylinderelements eben ineinander über.

Mit anderen Worten ausgedrückt, ist es von Vorteil, wenn das Rotorgehäuseelement mit den Zylinderelementen und dem Scheibenelement einteilig ausgebildet ist.

Dabei ist es möglich, dass das Rotorgehäuseelement in einem Tiefziehverfahren oder in einem Pressverfahren hergestellt wird bzw. ist.

Ein zweiter Aspekt der vorliegenden Erfindung umfasst ein Verfahren zur Magnetisierung einer Rotorvorrichtung des flachen bürstenlosen elektrischen Motors bzw. zur Ausbildung von magnetischen Polen in einer solchen Rotorvorrichtung.

Erfindungsgemäß bedient sich das Verfahren einer Rotorvorrichtung des flachen bürstenlosen elektrischen Motors nach dem ersten Aspekt.

Das Verfahren bedient sich einer Magnetisierungseinrichtung zum Magnetisieren von magnetisierungsbarem Material ,die in den Zwischenraum zwischen den Zylinderelementen des Rotorgehäuseelements der Rotorvorrichtung des flachen bürstenlosen elektrischen Motors anordenbar ist. Die Magnetisierungseinrichtung weist mindestens ein Spulenelement zur Erzeugung eines Magnetfeldes und vorzugsweise mindestens ein Kernelement, insbesondere einen Eisenkern, zur Verstärkung des von mindestens einem Spulenelement erzeugbaren Magnetfeldes auf.

Das erfindungsgemäße Verfahren umfasst die nachstehenden Schritte. Es umfasst ein Schritt des Verfahrens ein Positionieren der Rotorvorrichtung und der Magnetisierungseinrichtung. Anders ausgedrückt müssen in einem ersten Schritt die Rotorvorrichtung und die Magnetisierungseinrichtung zueinander positioniert werden.

Es umfasst ein Schritt des Verfahrens ein Einbringen der Magnetisierungseinrichtung in den Zwischenraum zwischen den Zylinderelementen des Rotorgehäuseelements der Rotorvorrichtung. Somit ist die Magnetisierungseinrichtung bereit zum Magnetisieren der Rotorvorrichtung.

Des Weiteren ist es günstig, dass ein Schritt des Verfahrens ein gemeinsames Magnetisieren der ersten und zweiten Magnetbaugruppe umfasst, sodass die Zylinderelemente hinsichtlich Polpaaren und Anzahl der Polpaare übereinstimmen. Mit diesem Schritt wird es also erreicht, dass neben der exakten Anzahl der Polpaare und der damit verbundenen magnetischen Ausrichtung (Nordpol, Südpol) auch die Position der erzeugten Pole in den Zylinderelementen exakt vorbestimmbar ist.

Auch ist es von Vorteil, wenn ein Schritt des Verfahrens ein Ausbringen der Magnetisierungseinrichtung aus dem Zwischenraum aufweist. Somit kann die Magnetisierungsvorrichtung zu einer weiteren Rotorvorrichtung positioniert werden und das Verfahren wiederholt werden.

Weitere Ausführungsbeispiele der vorliegenden Erfindung präzisieren die Merkmale der Statorvorrichtung des flachen bürstenlosen elektrischen Motors.

Vorzugsweise ist das Achsenelement als hervorstehender Stift oder dergleichen, insbesondere aus einem Vollmaterial, ausgebildet.

Ferner ist es bevorzugt, dass das Achsenelement in der Mitte des Statorgehäuseelements und so angeordnet ist, dass, im Querschnitt betrachtet, sich das Achsenelement und das Wandelement vom Bodenelement in die gleiche Richtung weg erstrecken.

Günstigerweise sind das Statorgehäuseelement und das Achsenelement einteilig bzw. integral miteinander ausgebildet.

Auch ist es günstig, wenn das Achsenelement eine Sicherungseinrichtung zum Sichern eines Wälzlagers, insbesondere einen Sprengring mit entsprechender Ausnehmung am Achsenelement, umfasst.

Vorteilhafterweise umfasst die Statorvorrichtung ein Gehäuseteil zum Anbringen einer Vielzahl von Zahnelementen.

Ferner ist es von Vorteil, wenn das Gehäuseteil als scheibenförmige Platte ausgebildet ist.

Des Weiteren ist es vorteilhaft, wenn eine Vielzahl von Zahnelementen mit dem Gehäuseteil fest verbunden ist, insbesondere vergossen, vorzugsweise mittels eines Kunststoffs vergossen ist.

Bevorzugterweise weist die Statorvorrichtung mindestens ein Zahnelement zum Bewickeln mit einer Spulenanordnung auf, wobei vorzugsweise das mindestens eine Zahnelement ein inneres und ein äußeres Ende und eine dazwischen angeordnete Aufnahme für eine gewickelte Spulenanordnung aufweist.

Auch ist es bevorzugt, dass die Statorvorrichtung eine Spulenanordnung mit einem Drahtelement umfasst, das um die Aufnahme des Zahnelements gewickelt ist. Vorzugsweise ist die Spulenanordnung mit dem Zahnelement, insbesondere mithilfe eines Kunststoffs, vergossen.

Ferner ist es möglich, dass das mindestens eine Zahnelement am inneren und am äußeren Ende ein Flächenteilstück einer Innenumfangsfläche und ein Flächenteilstück einer Außenumfangsfläche aufweist, um eine Innenumfangsfläche und eine Außenumfangsfläche zu bilden.

Vorzugsweise ist die Innenumfangsfläche an eine äußere Mantelfläche eines ersten Zylinderelements, insbesondere an eine äußere Mantelfläche einer ersten Magnetbaugruppe eines ersten Zylinderelements, einer Rotorvorrichtung angepasst, sodass die Innenumfangsfläche und die äußere Mantelfläche über einen Luftspalt voneinander trennbar sind.

Des Weiteren ist es bevorzugt, dass die Außenumfangsfläche an eine innere Mantelfläche eines zweiten Zylinderelements, insbesondere an eine innere Mantelfläche einer zweiten Magnetbaugruppe eines zweiten Zylinderelements, einer Rotorvorrichtung angepasst ist, sodass die Außenumfangsfläche und die innere Mantelfläche über einen Luftspalt voneinander trennbar sind.

Das Wälzlager ist außenseitig auf dem Achsenelement der Statorvorrichtung und innenseitig des ersten Zylinderelements der Rotorvorrichtung angeordnet.

In diesem Zusammenhang ist es von Vorteil, wenn das Wälzlager entweder an der Rotorvorrichtung oder an der Statorvorrichtung vormontiert ist.

Des Weiteren ist es günstig, wenn der Motor ein Motorgehäuseelement zum Verschließen des Motors und zum Befestigen an dem Statorgehäuseelement aufweist.

Mithilfe der Rotorvorrichtung und der Statorvorrichtung ist es möglich, einen Motor zu konstruieren, dessen effektives Gesamtdrehmoment bei im Vergleich zu Lösungen aus dem Stand der Technik gleicher Größe verbessert ist.

Auch kann mithilfe des erfindungsgemäßen Motors und auch mithilfe des erfindungsgemäßen Verfahrens (vergleiche den zweiten Aspekt der vorliegenden Erfindung) der Herstellungs- und Montageprozess vereinfacht werden. Im Ergebnis kann sogar eine Verbesserung der gesamten (Fertigungs-) Zykluszeit erreicht werden.

Ferner ist als überraschender Effekt aufgefallen, dass die geschilderte Konstruktion des erfindungsgemäßen Motors eben durch die Ausbildung des Achsenelements am Statorgehäuseelement bzw. an der Statorvorrichtung und der Positionierung des Wälzlagers eine erhebliche Reduktion der erzeugten Geräusche verursacht.

Nachstehend wird die Erfindung anhand von Ausführungsbeispielen in Verbindung mit zugehörigen Zeichnungen näher erläutert. Hierbei zeigen schematisch:
- **Fig. 1**: eine schematische Draufsicht auf eine erfindungsgemäße Rotorvorrichtung sowie eine räumliche Ansicht der erfindungsgemäßen Rotorvorrichtung;
- **Fig. 2**: eine Schnittansicht auf die erfindungsgemäße Rotorvorrichtung aus Fig. 1;
- **Fig. 3**: eine Schnittansicht auf eine erfindungsgemäße Statorvorrichtung;
- **Fig. 4**: eine räumliche Ansicht auf ein Zahnelement der erfindungsgemäßen Statorvorrichtung;
- **Fig. 5**: eine räumliche Ansicht und eine Draufsicht auf ein Gehäuseteil der erfindungsgemäßen Statorvorrichtung mit einer Vielzahl von Zahnelementen;
- **Fig. 6**: eine Schnittansicht eines erfindungsgemäßen flachen, bürstenlosen elektrischen Motors; und
- **Fig. 7**: eine Draufsicht auf die Rotorvorrichtung aus Figur 1 mit einer Magnetisierungseinrichtung.

In der nachfolgenden Beschreibung werden gleiche Bezugszeichen für gleiche Gegenstände verwendet.

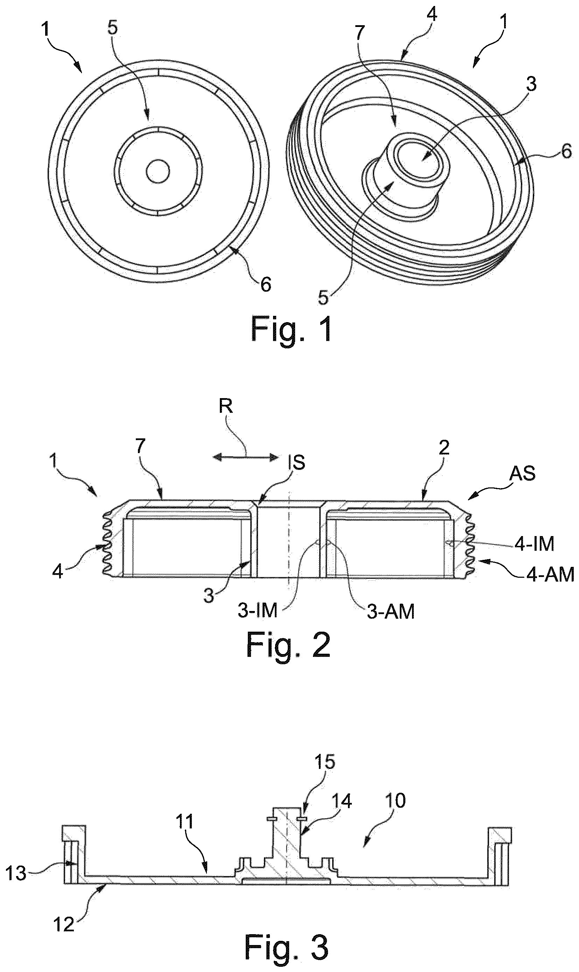

Figur 1 zeigt eine schematische Draufsicht auf eine Rotorvorrichtung 1 eines flachen bürstenlosen elektrischen Motors gemäß einem Ausführungsbeispiel der vorliegenden Erfindung sowie eine räumliche Ansicht der erfindungsgemäßen Rotorvorrichtung 1, wobei Figur 2 eine Schnittansicht auf die Rotorvorrichtung aus Fig. 1 darstellt.

Der Einfachheit und Kürze halber werden nachfolgend die Figuren 1 und 2 gemeinsam beschrieben.

Genauer dargestellt zeigen Figuren 1 und 2 eine Rotorvorrichtung 1 für den flachen bürstenlosen elektrischen Motor 30, insbesondere für ein Dachsystem eines Automobils.

Die Rotorvorrichtung 1 hat hierbei ein Rotorgehäuseelement 2 mit einem ersten 3 und einem zweiten Zylinderelement 4, wobei an dem ersten Zylinderelement 3 innenseitig an dessen innerer Mantelfläche 3-IM ein Wälzlager 31 anordenbar ist.

Die Zylinderelemente 3, 4 sind hohlzylindrisch ausgebildet, weisen unterschiedliche Innen- und Außendurchmesser auf, sodass zwischen den Zylinderelementen 3, 4 eine Statorvorrichtung 10 anordenbar ist, und sind zueinander konzentrisch ausgerichtet.

Dabei ist der Innendurchmesser des zweiten Zylinderelements 4 größer ausgebildet als der Außendurchmesser des ersten Zylinderelements 3.

Ferner zeigen Figuren 1 und 2, dass an jedem Zylinderelement 3, 4 eine Magnetbaugruppe 5, 6 angeordnet ist.

So hat also das erste Zylinderelement 3 eine erste Magnetbaugruppe 5, die holzylinderförmig ausgebildet ist.

Das erste Zylinderelement 3 weist eine innere 3-IM und eine äußere Mantelfläche 3-AM auf, wobei die erste Magnetbaugruppe 5 an der äußeren Mantelfläche 3-AM des ersten Zylinderelements 3 angeordnet ist.

Des Weiteren hat das zweite Zylinderelement 4 eine zweite Magnetbaugruppe 6, die holzylinderförmig ausgebildet ist, wobei das zweite Zylinderelement 4 eine innere 4-IM und eine äußere Mantelfläche 4-AM aufweist.

Die zweite Magnetbaugruppe 6 ist an der inneren Mantelfläche 4-IM des zweiten Zylinderelements 4 angeordnet.

Sowohl die zweite Magnetbaugruppe 6 als auch die erste Magnetbaugruppe 5 weisen ein magnetisierbares Material auf, um unterschiedliche Magnetpole auszubilden.

So stimmen, wie Figur 1 in ihrer schematischen Darstellung zeigt, die erste und zweite Magnetbaugruppe 5, 6 der entsprechenden Zylinderelemente 3, 4 in radialer Richtung hinsichtlich Polpaaren und Anzahl der Polpaare überein.

Insbesondere Figur 2 zeigt, dass das Rotorgehäuseelement 2 ein kreisringförmiges Scheibenelement 7, insbesondere als Boden des Rotorgehäuseelements 2, umfasst, das in radialer Richtung R eine Innenseite IS und eine Außenseite AS aufweist.

Hierbei ist innenseitig, insbesondere an der inneren, kreisförmigen Ausnehmung des Scheibenelements bzw. an dessen Rand, das erste Zylinderelement 3 und außenseitig, insbesondere am äußeren Rand des Scheibenelements 7, das zweite Zylinderelement 4 angeordnet.

Genauer dargestellt, gehen die Innenseite IS des Scheibenelements 7 und die innere Mantelfläche 3-IM des ersten Zylinderelements 3 eben ineinander über, wobei auch die Außenseite AS des Scheibenelements 7 und die äußere Mantelfläche 4-AM des zweiten Zylinderelements 4 eben ineinander übergehen.

Dabei ist das Rotorgehäuseelement 2 mit den Zylinderelementen 3, 4 und dem Scheibenelement 7 einteilig ausgebildet und wird in einem Tiefziehverfahren oder in einem Pressverfahren hergestellt.

Figur 3 zeigt eine Schnittansicht auf eine erfindungsgemäße Statorvorrichtung 10 für den flachen bürstenlosen elektrischen Motor 30 gemäß dem Ausführungsbeispiel, für ein Dachsystem eines Automobils.

Die Statorvorrichtung 10 hat dabei ein Statorgehäuseelement 11 mit einem Boden- 12 und einem Wandelement 13, die derart zueinander angeordnet sind, dass das Statorgehäuseelement 11 topfförmig ausgebildet ist.

Ferner hat die Statorvorrichtung 10 ein Achsenelement 14 zur außenseitigen Anordnung eines Wälzlagers 31 für eine Rotorvorrichtung 1, wobei das Achsenelement 14 in der Mitte des Statorgehäuseelements 11 und so angeordnet ist, dass im Querschnitt betrachtet sich das Achsenelement 14 und das Wandelement 13 vom Bodenelement 12 in die gleiche Richtung weg erstrecken.

Auch zeigt Figur 3, dass das Statorgehäuseelement 11 und das Achsenelement 14 einteilig bzw. integral miteinander ausgebildet sind, wobei das Achsenelement 14 eine Sicherungseinrichtung 15 zum Sichern eines Wälzlagers, insbesondere einen Sprengring mit entsprechender Ausnehmung am Achsenelement 14, hat.

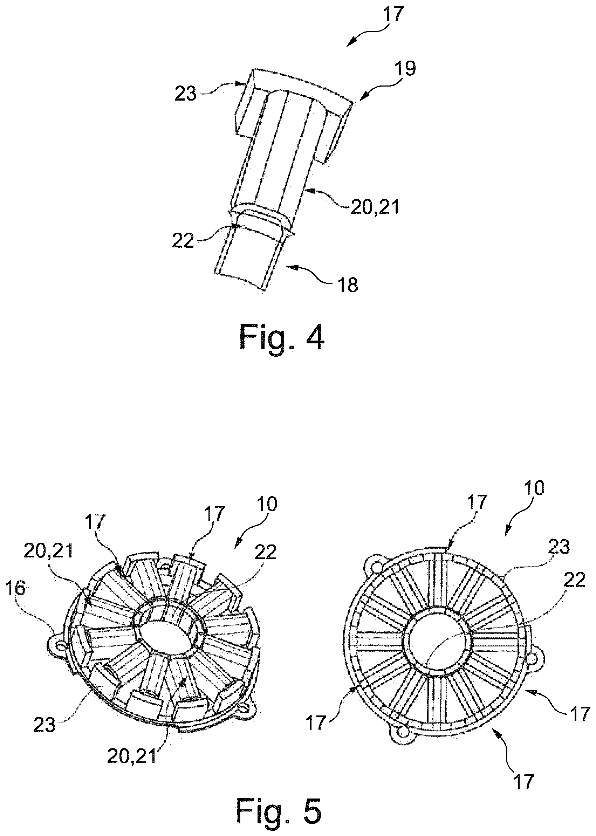

Figur 4 zeigt eine räumliche Ansicht auf ein Zahnelement 17 der Statorvorrichtung 10, wobei Figur 5 eine räumliche Ansicht und eine Draufsicht auf ein Gehäuseteil 16 der Statorvorrichtung 10 mit einer Vielzahl von Zahnelementen 17 zeigt.

Wie bereits angedeutet, hat die Statorvorrichtung 10 ein Gehäuseteil 16 zum Anbringen einer Vielzahl von Zahnelementen 17, wobei das Gehäuseteil 16 als scheibenförmige Platte ausgebildet ist.

Hierbei ist die Vielzahl von Zahnelementen 17 mit dem Gehäuseteil 16 fest verbunden, insbesondere vergossen (vgl. insbesondere Figur 5).

In Figuren 4 und 5 ist gezeigt, dass die Statorvorrichtung 10 diverse Zahnelemente 17 zum Bewickeln mit einer Spulenanordnung 21 aufweist.

Jedes Zahnelement 17 hat ein inneres und ein äußeres Ende 18, 19 und eine dazwischen angeordnete Aufnahme 20 für eine gewickelte Spulenanordnung 21, die ein Drahtelement umfasst, das um die Aufnahme 20 des Zahnelements 17 gewickelt ist.

Die Spulenanordnung ist mit dem Zahnelement 17 vergossen.

Wie Figur 4 zeigt, hat ein Zahnelement 17 am inneren und am äußeren Ende 18, 19 ein Flächenteilstück 22 einer Innenumfangsfläche und ein Flächenteilstück 23 einer Außenumfangsfläche, um eine Innenumfangsfläche und eine Außenumfangsfläche zu bilden.

Die Innenumfangsfläche ist dabei an eine äußere Mantelfläche 3-AM des ersten Zylinderelements 3, insbesondere an eine äußere Mantelfläche der ersten Magnetbaugruppe 5 des ersten Zylinderelements 3, der Rotorvorrichtung 1 angepasst, sodass die Innenumfangsfläche und die äußere Mantelfläche über einen Luftspalt voneinander trennbar sind.

Die Außenumfangsfläche ist an eine innere Mantelfläche 4-IM des zweiten Zylinderelements 4, insbesondere an eine innere Mantelfläche der zweiten Magnetbaugruppe 6 des zweiten Zylinderelements 4, der Rotorvorrichtung 1 angepasst, sodass die Außenumfangsfläche und die innere Mantelfläche über einen Luftspalt voneinander trennbar sind.

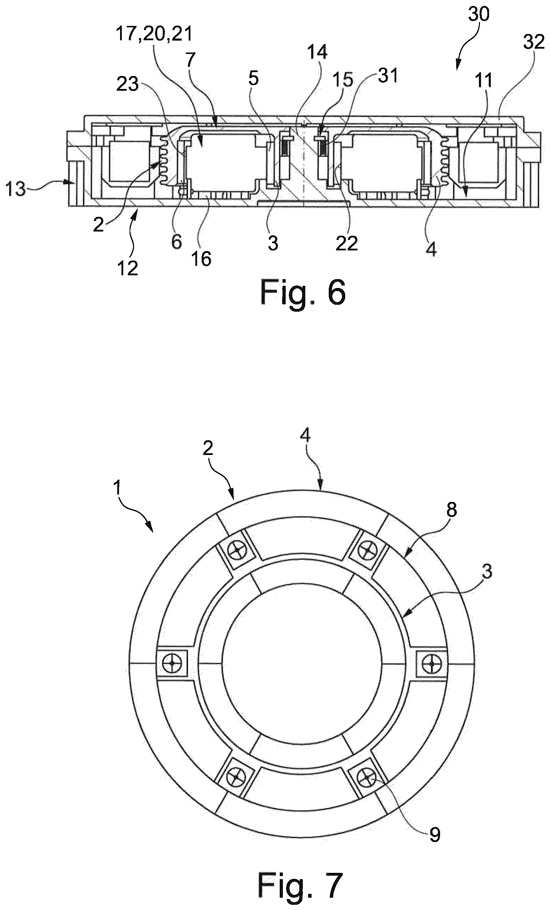

Vorgenannte Sachverhalte werden mit Blick auf Figur 6 verdeutlicht.

Denn Figur 6 zeigt eine Schnittansicht des erfindungsgemäßen flachen, bürstenlosen elektrischen Motors 30 für ein Dachsystem eines Automobils.

Der Motor 30 hat laut Figur 6 eine Rotorvorrichtung 1, wie in Figuren 1 bis 3 dargestellt, und eine Statorvorrichtung 10, wie in Figuren 4 und 5 gezeigt.

Die Rotorvorrichtung 1 ist mit dem Achsenelement 14 der Statorvorrichtung 10 über ein Wälzlager 31 verbunden, sodass Rotorvorrichtung 1 und Statorvorrichtung 10 relativ zueinander drehbar sind.

Der Motor hat ferner ein Motorgehäuseelement 32 zum Verschließen des Motors 30 und zum Befestigen an dem Statorgehäuseelement 11.

Selbstverständlich weist der Motor 30 auch noch Anschlüsse zur Versorgung mit elektrischer Energie auf, sodass die Rotorvorrichtung relativ zur Statorvorrichtung ein Drehmoment erzeugen kann.

Eben die doppelte Ausbildung einer Magnetbaugruppe 5, 6 an der Rotorvorrichtung 1 schafft einen Motor, der im Vergleich zu einem herkömmlichen Motor mit nur einer Magnetbaugruppe höheres Drehmoment erzeugen kann.

Figur 7 zeigt eine Draufsicht auf die Rotorvorrichtung 1 aus Figur 1 mit einer Magnetisierungseinrichtung 8 zum Magnetisieren von magnetisierbarem Material der Zylinderelemente 3, 4.

Genauer dargestellt zeigt Figur 7 eine Momentaufnahme eines Verfahrens zur Magnetisierung der Rotorvorrichtung 1.

Hierbei bedient sich das Verfahren der geschilderten Rotorvorrichtung 1 und einer Magnetisierungseinrichtung 8, die in den Zwischenraum zwischen den Zylinderelementen 3, 4 des Rotorgehäuseelement 2 der Rotorvorrichtung 1 angeordnet ist.

Die Magnetisierungseinrichtung 8 hat diverse Spulenelemente 9 zur Erzeugung eines Magnetfeldes und demensprechend auch diverse Kernelemente, insbesondere Eisenkerne, zur Verstärkung des von den Spulenelementen 9 erzeugbaren Magnetfeldes.

Im Grunde genommen weist nun das Verfahren zur Magnetisierung der Rotorvorrichtung 1 die folgenden Schritte auf:
- Positionieren der Rotorvorrichtung 1 und der Magnetisierungseinrichtung 8,
- Einbringen der Magnetisierungseinrichtung 8 in den Zwischenraum zwischen den Zylinderelementen 3, 4 des Rotorgehäuseelements 2 der Rotorvorrichtung 1,
- Gemeinsames Magnetisieren der ersten und zweiten Magnetbaugruppe 5, 6, sodass die Zylinderelemente 3, 4 hinsichtlich Polpaaren und Anzahl der Polpaare übereinstimmen, und anschließendes Ausbringen der Magnetisierungseinrichtung 8 aus dem Zwischenraum.

Hierbei beinhaltet das Magnetisieren der ersten und zweiten Magnetbaugruppe 5, 6 selbstverständlich, dass die Magnetisierungseinrichtung 8 für einen bestimmten Zeitraum mit elektrischer Energie zur Erzeugung von Magnetfeldern versorgt wird.

### Bezugszeichenliste

| | | | |
|---|---|---|---|
| 1 | Rotorvorrichtung | 20 | Aufnahme |
| 2 | Rotorgehäuseelement | 21 | Spulenanordnung |
| 3 | erstes Zylinderelement | 22 | Flächenteilstück |
| 4 | zweites Zylinderelement | 23 | Flächenteilstück |
| 5 | erste Magnetbaugruppe | | |
| 6 | zweite Magnetbaugruppe | 30 | Motor |
| 7 | Scheibenelement | 31 | Wälzlager |
| 8 | Magnetisierungseinrichtung | 32 | Motorgehäuseelement |
| 9 | Spulenelement | | |
| 10 | Statorvorrichtung | 3-IM | innere Mantelfläche |
| 11 | Statorgehäuseelement | 3-AM | äußere Mantelfläche |
| 12 | Bodenelement | | |
| 13 | Wandelement | 4-IM | innere Mantelfläche |
| 14 | Achsenelement | 4-AM | äußere Mantelfläche |
| 15 | Sicherungseinrichtung | | |
| 16 | Gehäuseteil | IS | Innenseite |
| 17 | Zahnelement | AS | Außenseite |
| 18 | inneres Ende | | |
| 19 | äußeres Ende | R | radiale Richtung |

## Patentansprüche

1. Flacher, bürstenloser elektrischer Motor (30) für ein Dachsystem eines Automobils aufweisend:
eine Rotorvorrichtung (1), aufweisend:
- ein Rotorgehäuseelement (2) mit einem ersten (3) und einem zweiten Zylinderelement (4),
- wobei das Rotorgehäuseelement (2) ein kreisringförmiges Scheibenelement (7) umfasst, das in radialer Richtung (R) eine Innenseite (IS) und eine Außenseite (AS) aufweist,
- wobei innenseitig das erste Zylinderelement (3) angeordnet ist,
- wobei außenseitig das zweite Zylinderelement (4) angeordnet ist,
- wobei das erste Zylinderelement (3) eine erste Magnetbaugruppe (5) aufweist und das zweite Zylinderelement (4) eine zweite Magnetbaugruppe (6) aufweist,
- wobei das erste Zylinderelement (3) eine innere (3-IM) und eine äußere Mantelfläche (3-AM) aufweist;
- wobei die erste Magnetbaugruppe (5) an der äußeren Mantelfläche (3-AM) des ersten Zylinderelements (3) angeordnet ist,
- wobei an dem ersten Zylinderelement (3) innenseitig an dessen innerer Mantelfläche (3-IM) ein Wälzlager (31) anordenbar ist;
- wobei die Zylinderelemente (3, 4) hohlzylindrisch ausgebildet sind, unterschiedliche Innen- und Außendurchmesser aufweisen, sodass zwischen den Zylinderelementen (3, 4) eine Statorvorrichtung (10) anordenbar ist, und zueinander konzentrisch ausgerichtet sind,
- wobei an jedem Zylinderelement (3, 4) mindestens eine Magnetbaugruppe (5, 6) angeordnet ist; und
eine Statorvorrichtung (10), aufweisend:
- ein Statorgehäuseelement (11) mit einem Boden- (12) und einem Wandelement (13), die derart zueinander angeordnet sind, dass das Statorgehäuseelement (11) topfförmig ausgebildet ist, und
- ein Achsenelement (14) zur außenseitigen Anordnung des Wälzlagers (31) für die Rotorvorrichtung (1),
wobei die Rotorvorrichtung (1) mit dem Achsenelement (14) der Statorvorrichtung (10) über das Wälzlager (31) verbunden ist, sodass die Rotorvorrichtung (1) und die Statorvorrichtung (10) relativ zueinander drehbar sind.

2. Bürstenloser elektrischer Motor (30) nach Anspruch 1,
wobei die erste Magnetbaugruppe (5) hohlzylinderförmig ausgebildet ist.

3. Bürstenloser elektrischer Motor (30) nach Anspruch 1 oder 2,
wobei die zweite Magnetbaugruppe (6) hohlzylinderförmig ausgebildet ist.

4. Bürstenloser elektrischer Motor (30) nach Anspruch 3,
- wobei das zweite Zylinderelement (4) eine innere (4-IM) und eine äußere Mantelfläche (4-AM) aufweist, und
- wobei die zweite Magnetbaugruppe (6) an der inneren Mantelfläche (4-IM) des zweiten Zylinderelements (4) angeordnet ist.

5. Bürstenloser elektrischer Motor (30) nach einem der vorangehenden Ansprüche,
- wobei die Innenseite (IS) des Scheibenelements (7) und die innere Mantelfläche (3-IM) des ersten Zylinderelements (3) eben ineinander übergehen, und/oder
- wobei die Außenseite (AS) des Scheibenelements (7) und die äußere Mantelfläche (4-AM) des zweiten Zylinderelements (4) eben ineinander übergehen, und/oder
- wobei das Rotorgehäuseelement (2) mit den Zylinderelementen (3, 4) und dem Scheibenelement (7) einteilig ausgebildet ist, und/oder
- wobei das Rotorgehäuseelement (2) in einem Tiefziehverfahren oder in einem Pressverfahren hergestellt ist.

6. Bürstenloser elektrischer Motor (30) nach einem der vorangehenden Ansprüche,
- wobei das Achsenelement (14) eine Sicherungseinrichtung (15) zum Sichern eines Wälzlagers, insbesondere einen Sprengring mit entsprechender Ausnehmung am Achsenelement, umfasst.

7. Bürstenloser elektrischer Motor (30) nach einem der vorangehenden Ansprüche,
- wobei das Achsenelement (14) in der Mitte des Statorgehäuseelements (11) und so angeordnet ist, dass im Querschnitt betrachtet sich das Achsenelement (14) und das Wandelement (13) vom Bodenelement (12) in die gleiche Richtung weg erstrecken, und/oder
- wobei das Statorgehäuseelement (11) und das Achsenelement (14) integral miteinander ausgebildet sind.

8. Bürstenloser elektrischer Motor (30) nach Anspruch 6 oder 7,
- wobei die Statorvorrichtung (10) ein Gehäuseteil (16) zum Anbringen einer Vielzahl von Zahnelementen (17) umfasst,
- wobei das Gehäuseteil (16) als scheibenförmige Platte ausgebildet ist, und/oder
- wobei eine Vielzahl von Zahnelementen (17) mit dem Gehäuseteil (16) fest verbunden, insbesondere vergossen, ist.

9. Bürstenloser elektrischer Motor (30) nach einem der Ansprüche 6 bis 8,
- wobei die Statorvorrichtung (10) mindestens ein Zahnelement (17) zum Bewickeln mit einer Spulenanordnung (21) aufweist,
- wobei das mindestens eine Zahnelement (17) ein inneres und ein äußeres Ende (18, 19) und eine dazwischen angeordnete Aufnahme (20) für eine gewickelte Spulenanordnung (21) aufweist, und/oder
- wobei die Statorvorrichtung (10) eine Spulenanordnung (21) mit einem Drahtelement umfasst, das um die Aufnahme (20) des Zahnelements (17) gewickelt ist.

10. Bürstenloser elektrischer Motor (30) nach Anspruch 9,
- wobei das mindestens eine Zahnelement (17) am inneren und am äußeren Ende (18, 19) ein Flächenteilstück (22) einer Innenumfangsfläche und ein Flächenteilstück (23) einer Außenumfangsfläche aufweist, um eine Innenumfangsfläche und eine Außenumfangsfläche zu bilden.

11. Bürstenloser elektrischer Motor (30) nach Anspruch 10,
- wobei die Innenumfangsfläche an eine äußere Mantelfläche (3-AM) eines ersten Zylinderelements (3) der Rotorvorrichtung (1) angepasst ist, sodass die Innenumfangsfläche und die äußere Mantelfläche über einen Luftspalt voneinander trennbar sind, und/oder
- wobei die Außenumfangsfläche an eine innere Mantelfläche (4-IM) eines zweiten Zylinderelements (4) der Rotorvorrichtung (1) angepasst ist, sodass die Außenumfangsfläche und die innere Mantelfläche über einen Luftspalt voneinander trennbar sind.

12. Verfahren zur Magnetisierung einer Rotorvorrichtung mit:
- einer Rotorvorrichtung (1) des flachen, bürstenlosen elektrischen Motors (30) nach einem der Ansprüche 1 bis 5,
- einer Magnetisierungseinrichtung (8), die in den Zwischenraum zwischen den Zylinderelementen (3, 4) des Rotorgehäuseelement (2) der Rotorvorrichtung (1) anordenbar ist,
- wobei die Magnetisierungseinrichtung (8) mindestens ein Spulenelement (9) zur Erzeugung eines Magnetfeldes und vorzugsweise mindestens ein Kernelement, insbesondere ein Eisenkern, zur Verstärkung des von mindestens einem Spulenelement (9) erzeugbaren Magnetfeldes aufweist,
- wobei das Verfahren die folgenden Schritte umfasst:
- Positionieren der Rotorvorrichtung (1) und der Magnetisierungseinrichtung (8),
- Einbringen der Magnetisierungseinrichtung (8) in den Zwischenraum zwischen den Zylinderelementen (3, 4) des Rotorgehäuseelements (2) der Rotorvorrichtung (1),
- Gemeinsames Magnetisieren der ersten und zweiten Magnetbaugruppe (5, 6), sodass die Zylinderelemente (3, 4) hinsichtlich Polpaaren und Anzahl der Polpaare übereinstimmen,
- Ausbringen der Magnetisierungseinrichtung (8) aus dem Zwischenraum.

## Claims

1. Flat, brushless electric motor (30) for a roof system of an automobile
a rotor device (1), comprising:
- a rotor housing element (2) having a first (3) and a second cylinder element (4),
- wherein the rotor housing element (2) comprises an annular disc element (7) which has an inner side (IS) and an outer side (AS) in the radial direction (R),
- whereby the first cylinder element (3) is arranged on an inner side,
- whereby the second cylinder element (4) is arranged on an outer side,
- wherein the first cylinder element (3) has a first magnet assembly (5) and the second cylinder element (4) has a second magnet assembly (6),
- wherein the first cylinder element (3) has an inner (3-IM) and an outer shell face (3-AM),
- wherein the first magnet assembly (5) is arranged on the outer shell face (3-AM) of the first cylinder element (3),
- wherein a roller bearing (31) can be arranged on the inner side of the first cylinder element (3) on its inner shell face (3-IM),
- wherein the cylinder elements (3, 4) are formed to be hollow cylindrical, have different inner and outer diameters, so that a stator device (10) can be arranged between the cylinder elements (3, 4), and are aligned concentrically to one another,
- wherein at least one magnet assembly (5, 6) is arranged on each cylinder element (3, 4); and
a stator device (10), comprising:
- a stator housing element (11) having a base element (12) and a wall element (13), which are mutually disposed in such a manner that the stator housing element (11) is configured in the shape of a pot, and
- an axle element (14) for externally disposing the roller bearing (31) for the rotor device (1),
wherein the rotor device (1) is connected to the axle element (14) of the stator device (10) via the roller bearing (31), so that the rotor device (1) and the stator device (10) are rotatable relative to one another.

2. Brushless electric motor (30) according to claim 1,
wherein the first magnet assembly (5) is hollow cylindrical in shape.

3. Brushless electric motor (30) according to claim 1 or 2,
wherein the second magnet assembly (6) is hollow cylindrical in shape.

4. Brushless electric motor (30) according to claim 3,
- wherein the second cylinder element (4) has an inner (4-IM) and an outer shell face (4-AM), and
- wherein the second magnet assembly (6) is arranged on the inner shell face (4-IM) of the second cylinder element (4).

5. Brushless electric motor (30) according to one of the preceding claims
- wherein the inner side (IS) of the disc element (7) and the inner shell face (3-IM) of the first cylinder element (3) merge evenly into one another, and/or
- wherein the outer side (AS) of the disc element (7) and the outer lateral surface (4-AM) of the second cylinder element (4) transition into one another in a planar manner, and/or
- wherein the rotor housing element (2) is formed in one piece with the cylinder elements (3, 4) and the disc element (7), and/or
- wherein the rotor housing element (2) is manufactured in a deep-drawing process or in a pressing process.

6. Brushless electric motor (30) according to one of the preceding claims,
- wherein the axle element (14) comprises a securing installation (15) for securing a roller bearing, in particular a snap ring with a corresponding recess on the axle element.

7. Brushless electric motor (30) according to one of the preceding claims,
- wherein the axle element (14) is arranged in the centre of the stator housing element (11) and in such a way that, when viewed in cross-section, the axle element (14) and the wall element (13) extend away from the base element (12) in the same direction, and/or
- wherein the stator housing element (11) and the axle element (14) are formed integrally with one another.

8. Brushless electric motor (30) according to claim 6 or 7,
- wherein the stator device (10) comprises a housing part (16) for attaching a plurality of tooth elements (17),
- wherein the housing part (16) is designed as a disc-shaped plate, and/or
- wherein a plurality of tooth elements (17) is firmly connected, in particular moulded, to the housing part (16).

9. Brushless electric motor (30) according to any one of claims 6 to 8,
- wherein the stator device (10) has at least one tooth element (17) for winding with a coil assembly (21),
- wherein the at least one tooth element (17) has an inner and an outer end (18, 19) and a receptacle (20) disposed therebetween for a wound coil arrangement (21), and/or
- wherein the stator device (10) comprises a coil assembly (21) having a wire element which is wound around the receptacle (20) of the tooth element (17).

10. Brushless electric motor (30) according to claim 9,
- wherein the at least one tooth element (17) has a surface portion (22) of an inner circumferential surface and a surface portion (23) of an outer circumferential surface at the inner and outer ends (18, 19) to form an inner circumferential surface and an outer circumferential surface, respectively.

11. Brushless electric motor (30) according to claim 10,
- wherein the inner circumferential surface is adapted to an outer shell face (3-AM) of a first cylinder element (3) of the rotor device (1), so that the inner circumferential surface and the outer shell face are configured to be separated from one another via an air gap, and/or
- wherein the outer circumferential surface is adapted to an inner shell face (4-IM) of a second cylinder element (4) of the rotor device (1), so that the outer circumferential surface and the inner shell face are configured to be separated from one another via an air gap.

12. Method for magnetising a rotor device having:
- a rotor device (1) of the flat brushless electric motor (30) according to any one of claims 1 to 5,
- a magnetising installation (8) which can be arranged in the space between the cylinder elements (3, 4) of the rotor housing element (2) of the rotor device (1),
- wherein the magnetising installation (8) has at least one coil element (9) for generating a magnetic field and preferably at least one core element, in particular an iron core, for amplifying the magnetic field which can be generated by at least one coil element (9),
- wherein the method comprises the following steps:
- positioning the rotor device (1) and the magnetising installation (8),
- inserting of the magnetising installation (8) into an intermediate space between the cylinder elements (3, 4) of the rotor housing element (2) of the rotor device (1),
- jointly magnetising the first and second magnet assemblies (5, 6) so that the cylinder elements (3, 4) match in terms of pole pairs and number of pole pairs,
- extracting the magnetising device (8) from the intermediate space.

## Revendications

1. Moteur électrique plat sans balais (30) pour un système de toit d'une automobile, comprenant :
un dispositif (1) formant rotor, comprenant :
- un élément (2) formant boîtier de rotor, comprenant un premier élément cylindrique (3) et un deuxième élément cylindrique (4),
- l'élément (2) formant boîtier de rotor comprenant un élément (7) formant disque annulaire qui présente, dans la direction radiale (R), un côté intérieur (IS) et un côté extérieur (AS),
- le premier élément cylindrique (3) étant agencé sur le côté intérieur,
- le deuxième élément cylindrique (4) étant agencé sur le côté extérieur,
- le premier élément cylindrique (3) présentant un premier ensemble magnétique (5) et le deuxième élément cylindrique (4) présentant un deuxième ensemble magnétique (6),
- le premier élément cylindrique (3) présentant une surface d'enveloppe intérieure (3-IM) et une surface d'enveloppe extérieure (3-AM) ;
- le premier ensemble magnétique (5) étant agencé sur la surface d'enveloppe extérieure (3-AM) du premier élément cylindrique (3),
- un palier à roulement (31) étant apte à être agencé sur le premier élément cylindrique (3), du côté intérieur, sur la surface d'enveloppe intérieure (3-IM) de celui-ci ;
- les éléments cylindriques (3, 4) étant réalisés sous forme de cylindres creux, présentant des diamètres intérieur et extérieur différents, de sorte qu'un dispositif (10) formant stator soit apte à être agencé entre les éléments cylindriques (3, 4), et étant alignés de manière concentrique l'un par rapport à l'autre,
- au moins un ensemble magnétique (5, 6) étant agencé sur chaque élément cylindrique (3, 4) ; et
un dispositif (10) formant stator comprenant :
- un élément (11) formant boîtier de stator, comprenant un élément de fond (12) et un élément de paroi (13) qui sont agencés l'un par rapport à l'autre de telle sorte que l'élément (11) formant boîtier de stator présente une forme en coupelle, et
- un élément d'axe (14) pour le montage côté extérieur du palier à roulement (31) pour le dispositif de rotor (1),
le dispositif (1) formant rotor étant relié à l'élément d'axe (14) du dispositif (10) formant stator par l'intermédiaire du palier à roulement (31), de telle sorte que le dispositif (1) formant rotor et le dispositif (10) formant stator soient aptes à tourner l'un par rapport à l'autre.

2. Moteur électrique sans balais (30) selon la revendication 1,
dans lequel le premier ensemble magnétique (5) est réalisé de façon à présenter une forme cylindrique creuse.

3. Moteur électrique sans balais (30) selon la revendication 1 ou la revendication 2,
dans lequel le deuxième ensemble magnétique (6) est réalisé de façon à présenter une forme cylindrique creuse.

4. Moteur électrique sans balais (30) selon la revendication 3,
- dans lequel le deuxième élément cylindrique (4) présente une surface d'enveloppe intérieure (4-IM) et une surface d'enveloppe extérieure (4-AM), et
- dans lequel le deuxième ensemble magnétique (6) est agencé sur la surface d'enveloppe intérieure (4-IM) du deuxième élément cylindrique (4).

5. Moteur électrique sans balais (30) selon l'une des revendications précédentes,
- dans lequel le côté intérieur (IS) de l'élément (7) formant disque et la surface d'enveloppe intérieure (3-IM) du premier élément cylindrique (3) se rejoignent à plat, et/ou
- dans lequel le côté extérieur (AS) de l'élément (7) formant disque et la surface d'enveloppe extérieure (4-AM) du deuxième élément cylindrique (4) se rejoignent à plat, et/ou
- dans lequel l'élément (2) formant boîtier de rotor est réalisé d'un seul tenant avec les éléments cylindriques (3, 4) et l'élément (7) formant disque, et/ou
- dans lequel l'élément (2) formant boîtier de rotor est fabriqué selon un procédé d'emboutissage profond ou selon un procédé de pressage.

6. Moteur électrique sans balais (30) selon l'une des revendications précédentes,
dans lequel l'élément d'axe (14) comprend un dispositif de fixation (15) pour fixer un palier à roulement, en particulier un circlip avec un évidement correspondant sur l'élément d'axe.

7. Moteur électrique sans balais (30) selon l'une des revendications précédentes,
dans lequel l'élément d'axe (14) est agencé au centre de l'élément (11) formant boîtier de stator et de telle sorte que, vu en coupe transversale, l'élément d'axe (14) et l'élément de paroi (13) s'étendent dans la même direction à partir de l'élément de base (12), et/ou
- dans lequel l'élément (11) formant boîtier de stator et l'élément d'axe (14) sont formés d'un seul tenant l'un avec l'autre.

8. Moteur électrique sans balais (30) selon la revendication 6 ou la revendication 7,
- dans lequel le dispositif (10) formant stator comprend une partie boîtier (16) pour la fixation d'une pluralité d'éléments dentés (17),
- la partie boîtier (16) étant réalisée sous forme de plaque en forme de disque, et/ou
- une pluralité d'éléments dentés (17) étant reliés de manière fixe à la partie boîtier (16) , en particulier moulés sur celle-ci.

9. Moteur électrique sans balais (30) selon l'une des revendications 6 à 8,
- dans lequel le dispositif (10) formant stator comprend au moins un élément denté (17) destiné à recevoir un agencement de bobines (21) enroulé,
- ledit au moins un élément denté (17) comprenant une extrémité intérieure et une extrémité extérieure (18, 19) et un logement (20) aménagé entre celles-ci pour un agencement de bobines enroulé (21), et/ou
- le dispositif (10) formant stator comprenant un agencement de bobines (21) avec un élément filaire enroulé autour du logement (20) de l'élément denté (17).

10. Moteur électrique sans balais (30) selon la revendication 9,
dans lequel ledit au moins un élément denté (17) comprend, à ses extrémités intérieure et extérieure (18, 19), une partie de surface (22) d'une surface périphérique intérieure et une partie de surface (23) d'une surface périphérique extérieure, afin de former une surface périphérique intérieure et une surface périphérique extérieure.

11. Moteur électrique sans balais (30) selon la revendication 10,
dans lequel la surface périphérique intérieure est adaptée à une surface d'enveloppe extérieure (3-AM) d'un premier élément cylindrique (3) du dispositif (1) formant rotor de telle sorte que la surface périphérique intérieure et la surface d'enveloppe extérieure sont aptes à être séparées l'une de l'autre par un entrefer, et/ou
- la surface périphérique extérieure étant adaptée à une surface d'enveloppe intérieure (4-IM) d'un deuxième élément cylindrique (4) du dispositif (1) formant rotor, de sorte que la surface périphérique extérieure et la surface d'enveloppe intérieure sont aptes à être séparées l'une de l'autre par un entrefer.

12. Procédé de magnétisation d'un dispositif rotor comprenant :
- un dispositif (1) formant rotor du moteur électrique plat sans balais (30) selon l'une des revendications 1 à 5,
- un dispositif de magnétisation (8) apte à être agencé dans l'espace présent entre les éléments cylindriques (3, 4) de l'élément (2) formant boîtier de rotor du dispositif (1) formant rotor,
- le dispositif de magnétisation (8) comprenant au moins un élément de bobine (9) pour générer un champ magnétique et de préférence au moins un élément noyau, en particulier un noyau en fer, pour renforcer le champ magnétique apte à être généré par au moins un élément de bobine (9),
- le procédé comprenant les étapes suivantes :
- positionner le dispositif à rotor (1) et le dispositif de magnétisation (8),
- introduire le dispositif de magnétisation (8) dans l'espace présent entre les éléments cylindriques (3, 4) de l'élément (2) formant boîtier de rotor du dispositif de rotor (1),
- magnétiser de façon commune les premier et deuxième ensembles magnétiques (5, 6) de telle sorte que les éléments cylindriques (3, 4) coïncident en termes de paires de pôles et de nombre de paires de pôles,
- retirer le dispositif de magnétisation (8) hors de l'entrefer.
